# EUROPÄISCHE PATENTANMELDUNG

(11) **EP 0 906 849 A2**
(43) Veröffentlichungstag der Anmeldung: **07.04.1999**
(21) Anmeldenummer: 98113563.5
(22) Anmeldetag: 21.07.1998
(51) Int. Cl.: B60Q 1/10

(54) **Einrichtung zur Regelung der Leuchtweite von Scheinwerfern von Fahrzeugen**

(30) Priorität: 02.10.1997 DE 19743670
(71) Anmelder: ROBERT BOSCH GMBH, 70442 Stuttgart (DE)
(72) Erfinder: Zillgitt, Ulrich, 73630 Remshalden (DE)

(57) **Zusammenfassung**

Die Einrichtung weist den Scheinwerfern zugeordnete Verstelleinrichtungen auf, durch die die Leuchtweite der durch die Scheinwerfer ausgesandten Lichtbündel äbderbar ist. Eine Sensoreinrichtung (22) weist einen Einfederungssensor (24) auf, durch den die Einfederung des Fahrzeugaufbaus (12) an der Hinterachse (26) des Fahrzeugs erfaßt wird. Die Sensoreinrichtung (22) weist außerdem einen Neigungssensor (30) auf, durch den die Neigung (β) des Fahrzeugaufbaus (12) bezüglich einer Richtung (31) zum Erdschwerpunkt erfaßt wird. Die Sensoreinrichtung (22) ist mit einer Auswerteeinrichtung (34) verbunden, in der die Signale der Sensoren (24,30) ausgewertet werden und hieraus zumindest annähernd die Neigung (γ) des Fahrzeugaufbaus (12) bezüglich der Fahrbahn (11) ermittelt wird. Durch die Auswerteeinrichtung (34) werden die Verstelleinrichtungen (20) derart angesteuert, daß die Leuchtweite der durch die Scheinwerfer ausgesandten Lichtbündel unabhängig von der Neigung (γ) des Fahrzeugaufbaus (12) zumindest annähernd konstant gehalten wird.

## Beschreibung

### Stand der Technik

Die Erfindung geht aus von einer Einrichtung zur Regelung der Leuchtweite von Scheinwerfern von Fahrzeugen nach der Gattung des Anspruchs 1.

Eine solche Einrichtung ist durch die DE 30 48 751 A1 bekannt. Diese Einrichtung weist den Scheinwerfern zugeordnete Verstelleinrichtungen auf, durch die die Leuchtweite der durch die Scheinwerfer ausgesandten Lichtbündel änderbar ist. Weiterhin weist die Einrichtung eine Sensoreinrichtung auf, mit einem Einfederungssensor, durch den die Einfederung des Fahrzeugaufbaus an wenigstens einer Achse des Fahrzeugs erfaßt wird. Schließlich weist die Einrichtung eine Auswerteeinrichtung auf, die mit der Sensoreinrichtung und mit den Verstelleinrichtungen verbunden ist und durch die aus den Signalen der Sensoreinrichtung die Neigung des Fahrzeugaufbaus ermittelt wird und abhängig davon die Verstelleinrichtungen angesteuert werden. Nachteilig bei dieser bekannten Ausführung der Einrichtung ist, daß nur mit dem Einfederungssensor als einzigem Sensor die Neigung des Fahrzeugaufbaus unter Umständen nicht mit ausreichender Genauigkeit ermittelt werden kann, so daß es zu Fehleinstellungen der Leuchtweite der durch die Scheinwerfer ausgesandten Lichtbündel kommen kann.

### Vorteile der Erfindung

Die erfindungsgemäße Einrichtung zur Regelung der Leuchtweite von Scheinwerfern von Fahrzeugen hat demgegenüber den Vorteil, daß durch den zusätzlich vorgesehenen wenigstens einen Neigungssensor ein zusätzliches Signal über die Änderung der Lage des Fahrzeugaufbaus erhalten wird, so daß durch die Auswerteeinrichtung die Neigung des Fahrzeugaufbaus mit größerer Genauigkeit ermittelt werden kann und somit auch die Leuchtweite der durch die Scheinwerfer ausgesandten Lichtbündel mit größerer Genauigkeit geregelt werden kann.

In den abhängigen Ansprüchen sind vorteilhafte Ausgestaltungen und Weiterbildungen der erfindungsgemäßen Einrichtung angegeben. Die Ausbildung gemäß Anspruch 2 ermöglicht einen besonders einfachen Aufbau der Einrichtung, da nur an einer Achse der Anbau des Einfederungssensors vorgesehen zu werden braucht. Die Merkmale gemäß Anspruch 4 ermöglichen einen einfachen Aufbau des Einfederungssensors. Durch den gemäß Anspruch 5 vorgesehenen weiteren Neigungssensor wird die Genauigkeit der Ermittlung der Fahrzeugneigung und damit der Regelung der Leuchtweite weiter verbessert. Durch die Ausbildung gemäß Anspruch 6 ist nur ein Drehhebel erforderlich. Bei der Ausbildung gemäß Anspruch 7 ist kein zusätzlicher Drehhebel erforderlich. Die Ausbildung gemäß Anspruch 8 ermöglicht einen besonders einfachen Aufbau der Einrichtung, da diese mit den Verstelleinrichtungen und der die Sensoreinrichtung sowie die Auswerteeinrichtung enthaltenden Baueinheit nur drei Bauteile erfordert.

### Zeichnung

Zwei Ausführungsbeispiele der Erfindung sind in der Zeichnung dargestellt und in der nachfolgenden Beschreibung näher erläutert. Es zeigen Figur 1 ein Fahrzeug in einer Seitenansicht mit einer Einrichtung zur Regelung der Leuchtweite von dessen Scheinwerfern, Figur 2 ausschnittsweise die Hinterachse des Fahrzeugs mit einer Sensoreinrichtung der Einrichtung gemäß einem ersten Ausführungsbeispiel und Figur 3 ausschnittsweise die Hinterachse des Fahrzeugs mit der Sensoreinrichtung gemäß einem zweiten Ausführungsbeispiel.

### Beschreibung der Ausführungsbeispiele

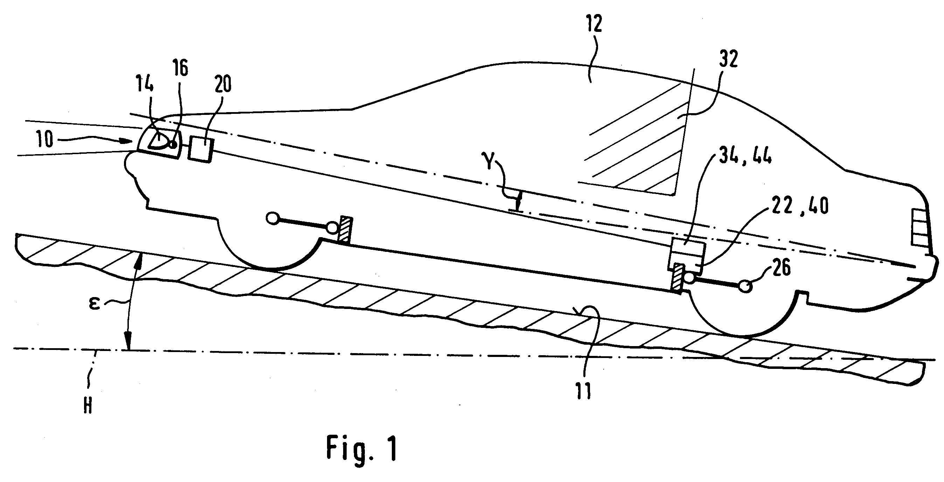

Ein in Figur 1 dargestelltes Fahrzeug, insbesondere ein Kraftfahrzeug, weist an seiner Vorderseite in bekannter Weise wenigstens zwei Abblendlichtscheinwerfer 10 auf, von denen in Figur 1 nur einer erkennbar ist. Die Scheinwerfer 10 sind mit dem Aufbau 12 des Fahrzeugs, insbesondere mit dessen Karosserie, in bekannter Weise verbunden. Bei einer Änderung der Neigung γ des Fahrzeugaufbaus 12 relativ zur Fahrbahn 11 ändert sich auch die Neigung der Scheinwerfer 10 und damit die Leuchtweite der durch diese ausgesandten Lichtbündel. Bei einer Beladung des Fahrzeugs wird dabei die Leuchtweite vergrößert, was zu einer Blendung entgegenkommender Verkehrsteilnehmer führen würde. Zur Ermöglichung einer Einstellung der Leuchtweite der durch die Scheinwerfer 10 ausgesandten Lichtbündel sind die Scheinwerfer 10 oder zumindest deren Reflektoren 14 um eine etwa horizontale Achse 16 verschwenkbar. Um die Leuchtweite der durch die Scheinwerfer 10 ausgesandten Lichtbündel unabhängig von der Neigung γ des Fahrzeugaufbaus 12 zumindest annähernd konstant zu halten, ist eine Einrichtung zur Regelung der Leuchtweite vorgesehen, die nachfolgend näher erläutert wird. Die Neigung γ des Fahrzeugaufbaus 12 kann sich nicht nur bedingt durch eine Beladung ändern, sondern auch beispielsweise infolge von Fahrbahnunebenheiten oder infolge von Brems- und Beschleunigungsvorgängen während der Fahrt des Fahrzeugs.

Diese Einrichtung weist den Scheinwerfern 10 zugeordnete Verstelleinrichtungen 20 auf, durch die die Scheinwerfer 10 bzw. deren Reflektoren 14 um die Achse 16 verschwenkbar sind. Die Verstelleinrichtungen 20 können beispielsweise als Antrieb jeweils einen Elektromotor aufweisen, der über ein Getriebe ein am Scheinwerfer 10 bzw. an dessen Reflektor 14 exzentrisch zur Achse 16 angreifendes Stellelement bewegt. Alternativ können die Verstelleinrichtungen 20 auch pneumatisch oder hydraulisch angetrieben werden, wozu entsprechende Druckquellen wie beispielsweise Pumpen vorgesehen sind.

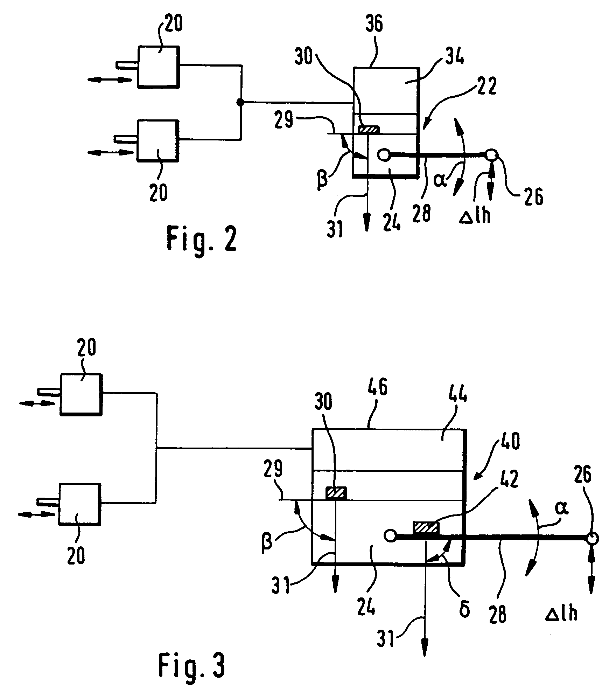

Die Einrichtung weist außerdem eine Sensoreinrichtung 22 auf, die dazu dient, Signale zu erzeugen, aus denen die Neigung γ des Fahrzeugaufbaus 12 zumindest annähernd ermittelt werden kann. Die Sensoreinrichtung 22 weist gemäß einem in Figur 2 dargestellten ersten Ausführungsbeispiel einen Einfederungssensor 24 auf, durch den die Einfederung des Fahrzeugaufbaus 12 an einer Achse, vorzugsweise der Hinterachse 26 des Fahrzeugs erfaßt wird. Der Einfederungssensor 24 ist als Drehwinkelsensor ausgebildet, durch den die Verdrehung eines einerseits am Fahrzeugaufbau 12 und andererseits an der Achse 26 angelenkten Drehhebels 28 erfaßt wird, die proportional der Einfederung des Fahrzeugaufbaus 12 ist. Der Drehhebel 28 kann dabei als gesondertes Bauteil nur für den Drehwinkelsensor 24 vorgesehen sein oder ein Aufhängungsteil der Achse 26 bilden. Bei einer Einfederung des Fahrzeugaufbaus 12 an der Hinterachse 26 um einen Weg Δlh führt der Drehhebel 28 eine Verdrehung um einen Winkel α aus, der durch den Drehwinkelsensor 24 erfaßt wird. Der Drehwinkelsensor 24 kann beispielsweise nach dem Hall-Prinzip aufgebaut sein, bei dem die bei Bewegung eines stromdurchflossenen Leiters in einem Magnetfeld entstehende elektrische Spannung ausgewertet wird.

Die Sensoreinrichtung 22 weist außerdem einen Neigungssensor 30 auf, durch den die Neigung des Fahrzeugteils, an dem dieser angeordnet ist, bezüglich der Richtung zum Erdschwerpunkt bzw. Erdmittelpunkt erfaßt wird. Durch den Neigungssensor 30 wird dabei der Winkel β zwischen der Anbauebene 29 des Sensors 30 und der Richtung 31 zum Erdschwerpunkt erfaßt. Der Neigungssensor 30 ist am Fahrzeugaufbau 12 angeordnet, so daß durch diesen die Neigung des Fahrzeugaufbaus 12 bezüglich der Richtung 31 zum Erdschwerpunkt erfaßt wird. Der Neigungssensor 30 ist derart angeordnet, daß dessen Meßebene in einer vertikalen Längsebene 32 des Fahrzeugaufbaus 12 verläuft. Der Neigungssensor 30 ist vorzugsweise mit dem die Einfederung erfassenden Drehwinkelsensor 24 zu einer Baueinheit, insbesondere in einem gemeinsamen Gehäuse 36 zusammengefaßt.

Der Drehwinkelsensor 24 und der Neigungssensor 30 sind mit einer Auswerteeinrichtung 34 verbunden, an die die Sensoren 24,30 elektrische Signale über die von diesen erfaßte Einfederung und Neigung liefern. In der Auswerteeinrichtung 34 wird aus diesen Signalen näherungsweise die Neigung γ des Fahrzeugaufbaus 12 relativ zur Fahrbahn 11 ermittelt. Dabei können bestimmte Kombinationen der Signale des Drehwinkelsensors 24 und des Neigungssensors 30 bestimmten Neigungen γ des Fahrzeugaufbaus 12 bezüglich der Fahrbahn 11 zugeordnet werden, denen wiederum jeweils eine vorgegebene Einstellung der Leuchtweite der Scheinwerfer 10 zugeordnet ist. Durch die Auswerteeinrichtung 34 werden die Verstelleinrichtungen 20 der Scheinwerfer 10 derart angesteuert, daß die Leuchtweite der durch die Scheinwerfer 10 ausgesandten Lichtbündel zumindest annähernd konstant auf die korrekte Leuchtweite eingestellt wird. Die Verstelleinrichtungen 20 können einen eigenen Regelkreis enthalten, so daß deren Stellmotoren sich bei Erreichen der vorgegebenen Stellung selbstätig abschalten. Alternativ können die Verstelleinrichtungen 20 beispielsweise Schrittmotoren als Antrieb aufweisen, die durch die Auswerteeinrichtung 34 mit Frequenzsignalen angesteuert werden, so daß die Schrittmotoren für die notwendige Zeitdauer betrieben werden, um die Scheinwerfer 10 in die für die vorgegebene Leuchtweite erforderliche Stellung zu bewegen. Vorzugsweise ist auch die Auswerteeinrichtung 34 in die Baueinheit, insbesondere in das Gehäuse 36 mit der Sensoreinrichtung 22 integriert, so daß nur eine Baueinheit im Bereich der Hinterachse 26 des Fahrzeugs angeordnet und elektrisch angeschlossen zu werden braucht.

Aufgrund der Charakteristik der Federung des Fahrzeugs können nur ganz bestimmte durch den Neigungssensor 30 erfaßte Neigungswinkel β bei einer Einfederung der Hinterachse 26 des Fahrzeugs auftreten und dieser zugeordnet werden. Die Funktion der Einrichtung ist somit auf den jeweiligen Fahrzeugtyp abgestimmt, da sich nur für diesen die charakteristischen Zusammenhänge zwischen der Einfederung der Hinterachse 26 und der Neigung des Fahrzeugsaufbaus 12 bezüglich der Richtung zum Erdschwerpunkt ergeben.

Die Auswertung der Signale der Sensoren 24,30 durch die Auswerteeinrichtung 34 kann beispielsweise im Stand des Fahrzeugs erfolgen. Es kann außerdem vorgesehen werden, daß während der Anfahrphase des Fahrzeugs ebenfalls eine Auswertung der Signale der Sensoren 24,30 erfolgt, vorzugsweise bei Fahrt mit konstanter Geschwindigkeit. Hierdurch erfolgt eine mehrmalige Überprüfung des Signals des Neigungssensors 30 auf Plausibilität. Bei dieser Ausführung der Einrichtung werden durch diese zur Regelung der Leuchtweite nur Änderungen der Neigung γ des Fahrzeugaufbaus 12 ausgeglichen, die durch eine Beladung des Fahrzeugs hervorgerufen werden. Durch den Neigungssensor 30 werden darüberhinaus auch Beschleunigungen und Verzögerungen des Fahrzeugs erfaßt, da sich hierbei auch die Neigung β des Fahrzeugsaufbaus 12 bezüglich der Richtung 31 zum Erdschwerpunkt ändert. Durch eine geeignete Auswertung dieser Signale des Neigungssensors 30 in der Auswerteeinrichtung 34 kann somit auch eine Regelung der Leuchtweite der Scheinwerfer 10 während der Fahrt des Fahrzeugs erfolgen, durch die diese Änderungen der Neigung γ des Fahrzeugaufbaus 12 ausgeglichen werden.

In Figur 3 ist die Einrichtung zur Regelung der Leuchtweite gemäß einem zweiten Ausführungsbeispiel dargestellt, bei dem diese wie beim ersten Ausführungsbeispiel den Scheinwerfern 10 zugeordnete Verstelleinrichtungen 20 aufweist, jedoch die Ausbildung der Sensoreinrichtung 40 modifiziert ist. Die Sensoreinrichtung 40 weist den gleich wie beim ersten Ausführungsbeispiel ausgebildeten Einfederungssensor 24 auf, der vorzugsweise als Drehwinkelsensor ausgebildet ist und die Verdrehung α eines an der Hinterachse 26 des Fahrzeugs und am Fahrzeugaufbau 12 angelenkten Drehhebels 28 erfaßt. Außerdem weist die Sensoreinrichtung 40 den am Fahrzeugaufbau 12 angeordneten Neigungssensor 30 auf, durch den der Neigungswinkel β zwischen der Anbauebene 29 des Sensors 30 am Fahrzeugaufbau 12 bezüglich der Richtung 31 zum Erdschwerpunkt erfaßt wird.

Die Sensoreinrichtung 40 weist zusätzlich einen weiteren Neigungssensor 42 auf, der den Neigungswinkel δ eines bei Ein- und Ausfederung der Hinterachse 26 des Fahrzeugs eine Winkeländerung ausführenden Bauteils bezüglich der Richtung 31 zum Erdschwerpunkt erfaßt. Vorzugsweise ist der weitere Neigungssensor 42 an dem Drehhebel 28 angeordnet, dessen Verdrehung α durch den Drehwinkelsensor 24 erfaßt wird und der weiterhin vorzugsweise ein Aufhängungsteil der Hinterachse 26 bildet. Alternativ kann der weitere Neigungssensor 42 auch getrennt vom Drehhebel 28 angeordnet sein, wobei dann die Neigungsänderung des Drehhebels 28 über eine geeignete Umlenkeinrichtung auf den weiteren Neigungssensor 42 übertragen wird. Die drei Sensoren 24,30,42 sowie die Auswerteeinrichtung 44 sind vorzugsweise zu einer gemeinsamen Baueinheit zusammengefaßt, die ein gemeinsames Gehäuse 46 aufweist. Der Auswerteeinrichtung 44 wird durch den Drehwinkelsensor 24 ein Signal über die Einfederung des Fahrzeugaufbaus 12 an der Hinterachse 26 zugeführt, durch den Neigungssensor 30 ein Signal über die Neigung β des Fahrzeugaufbaus 12 bezüglich der Richtung 31 zum Erdschwerpunkt und durch den weiteren Neigungssensor 42 ein Signal für die Neigung δ des Drehhebels 28 bezüglich der Richtung 31 zum Erdschwerpunkt. Aus den Signalen dieser drei Sensoren 24,30,42 kann durch die Auswerteeinrichtung 44 die Neigung γ des Fahrzeugaufbaus 12 bezüglich der Fahrbahn 11 mit großer Genauigkeit ermittelt werden. Durch die Signale des Drehwinkelsensors 24 und des weiteren Neigungssensors 42 kann die Neigung ε der Fahrbahn 11 bezüglich der Horizontalen H ermittelt und eliminiert werden. Damit ist es möglich, die ermittelte Neigung ε der Fahrbahn 11 von dem Signal des Neigungssensors 30 herauszurechnen, so daß die Neigung γ des Fahrzeugaufbaus 12 bezüglich der Fahrbahn 11 ermittelt werden kann, die durch eine Beladung des Fahrzeugs oder durch Beschleunigungs- oder Bremsvorgänge des Fahrzeugs hervorgerufen werden.

Wie bei der Einrichtung gemäß dem ersten Ausführungsbeispiel vorstehend beschrieben kann auch bei der Einrichtung gemäß dem zweiten Ausführungsbeispiel vorgesehen sein, daß bei dieser nur bei stehendem Fahrzeug durch die Auswerteeinrichtung 44 die Signale der Sensoren 24,30,42 ausgewertet werden und die Leuchtweite der Scheinwerfer 10 korrekt eingestellt wird, wobei dann nur durch eine Beladung des Fahrzeugs auftretende Änderungen der Neigung γ des Fahrzeugaufbaus 12 bezüglich der Fahrbahn 11 ausgeglichen werden. Alternativ kann diese Auswertung auch bei fahrendem Fahrzeug erfolgen, so daß auch durch Beschleunigungs- und Bremsvorgänge des Fahrzeugs hervorgerufene Änderungen der Neigung γ des Fahrzeugaufbaus 12 bezüglich der Fahrbahn 11 ausgeglichen werden.

Die Einrichtung zur Regelung der Leuchtweite der durch die Scheinwerfer 10 ausgesandten Lichtbündel gemäß den vorstehend beschriebenen Ausführungsbeispielen erfordert als Bauteile nur die den Scheinwerfern 10 zugeordneten Verstelleinrichtungen 20, die für beide Scheinwerfer 10 identisch ausgebildet sein können, sowie die Baueinheit mit der Sensoreinrichtung 22 bzw. 40 und der Auswerteeinrichtung 24 bzw. 44, und weist somit einen einfachen Aufbau auf.

## Patentansprüche

1. Einrichtung zur Regelung der Leuchtweite von Scheinwerfer von Fahrzeugen mit den Scheinwerfern (10) zugeordneten Verstelleinrichtungen (20), durch die die Leuchtweite der durch die Scheinwerfer (10) ausgesandten Lichtbündel änderbar ist, mit wenigstens einer Sensoreinrichtung (22;40), die wenigstens einen Einfederungssensor (24) aufweist, durch den die Einfederung des Fahrzeugaufbaus (12) an wenigstens einer Achse (26) des Fahrzeugs erfaßt wird, und mit einer mit der Sensoreinrichtung (22;40) verbundenen Auswerteeinrichtung (34;44), durch die aus den Signalen der Sensoreinrichtung (22;40) zumindest annähernd die Neigung (γ) des Fahrzeugaufbaus (12) bezüglich der Fahrbahn (11) ermittelt wird und die Verstelleinrichtungen (20) zur wenigstens annähernden Konstanthaltung der Leuchtweite der durch die Scheinwerfer (10) ausgesandten Lichtbündel angesteuert werden, dadurch gekennzeichnet, daß die wenigstens eine Sensoreinrichtung (22;40) zusätzlich wenigstens einen Neigungssensor (30) aufweist, durch den die Neigung (β) des Fahrzeugaufbaus (12) bezüglich einer Richtung (31) zum Erdschwerpunkt erfaßt wird.

2. Einrichtung nach Anspruch 1, dadurch gekennzeichnet, daß die Sensoreinrichtung (22;40) nur einen Einfederungssensor (24) aufweist, durch den die Einfederung des Fahrzeugaufbaus (12) an einer Achse (26), vorzugsweise an der Hinterachse (26) des Fahrzeugs erfaßt wird.

3. Einrichtung nach Anspruch 1 oder 2, dadurch gekennzeichnet, daß die Meßebene des Neigungssensors (30) zumindest annähernd in einer vertikalen Längsebene (32) des Fahrzeugaufbaus (12) verläuft.

4. Einrichtung nach einem der Ansprüche 1 bis 3, dadurch gekennzeichnet, daß der wenigstens eine Einfederungssensor (24) als Drehwinkelsensor ausgebildet ist, durch den die Verdrehung (α) eines am Fahrzeugaufbau (12) und an der Achse (26) des Fahrzeugs angelenkten Drehhebels (28) erfaßt wird.

5. Einrichtung nach einem der vorstehenden Ansprüche, dadurch gekennzeichnet, daß die Sensoreinrichtung (40) zusätzlich wenigstens einen weiteren Neigungssensor (42) aufweist, durch den die Neigung (δ) eines mit der Achse (26) des Fahrzeugs verbundenen, bei einer Ein- und Ausfederung der Achse (26) eine Neigungsänderung ausführenden Bauteils (28) bezüglich einer Richtung (31) zum Erdschwerpunkt erfaßt wird.

6. Einrichtung nach Anspruch 4 und Anspruch 5, dadurch gekennzeichnet, daß durch den wenigstens einen Einfederungssensor (24) und den wenigstens einen weiteren Neigungssensor (42) am selben Drehhebel (28) dessen Drehwinkel (α) und dessen Neigung (δ) erfaßt werden.

7. Einrichtung nach einem der Ansprüche 4 bis 6, dadurch gekennzeichnet, daß der Drehhebel (28) ein Aufhängungsteil der Achse (26) des Fahrzeugs bildet.

8. Einrichtung nach einem der vorstehenden Ansprüche, dadurch gekennzeichnet, daß die Sensoreinrichtung (22;40) und die Auswerteeinrichtung (34;44) zu einer Baueinheit in einem gemeinsamen Gehäuse (36;46) zusammengefaßt sind, die im Bereich einer Achse (26) des Fahrzeugs angeordnet ist.
